# EUROPEAN PATENT SPECIFICATION

(11) **EP 4 011 985 B1**
(45) Date of publication and mention of the grant of the patent: **06.11.2024**
(21) Application number: 20851449.7
(22) Date of filing: 03.08.2020
(51) Int. Cl.: C09D 5/02, C09D 183/04, C09D 7/45, C09D 7/63, C08G 77/12, C08G 77/20, C08L 83/04

(54) **CONDENSATION-CURABLE SILICONE-IN-WATER DISPERSION, METHOD FOR PRODUCING SAME, AND SILICONE FILM**
KONDENSATIONSVERNETZENDE SILIKON-IN-WASSER-DISPERSION, VERFAHREN ZU DEREN HERSTELLUNG UND SILIKONFILM
DISPERSION DE SILICONE-DANS-EAU, DURCISSABLE PAR CONDENSATION, PROCÉDÉ DE PRODUCTION ET FILM DE SILICONE ASSOCIÉS

(30) Priority: 09.08.2019 JP 2019147244
(43) Date of publication of application: 15.06.2022
(73) Proprietor: Shin-Etsu Chemical Co., Ltd., Tokyo 100-0005 (JP)
(72) Inventor: TAWATA, Hanako, Annaka-shi, Gunma 379-0224 (JP); INOKUCHI, Yoshinori, Annaka-shi, Gunma 379-0224 (JP)
(74) Representative: V.O.
(86) International application number: PCT/JP2020/029637
(87) International publication number: WO 2021/029250

(56) References cited:
- WO-A1-2018/135369
- WO-A1-2020/017586
- JP-A- 2000 034 205
- JP-A- H11 246 769
- JP-A- H11 335 228
- No further relevant documents disclosed

## Description

### TECHNICAL FIELD

The present invention relates to an emulsion composition used for preparing products such as a slipping agent, a fiber treatment agent, and a coating agent; and relates to a coating.

### BACKGROUND OF THE INVENTION

Emulsion compositions which form a coating upon drying are generally composed of various components and used as fiber treatment agents, coating agents for rubbers, coating agents for building materials, or coating agents for paper or plastic films, or as additives therefor, for the purpose of providing slipping property, water repellency, and releasability.

A coating formed from a high-molecular weight polymer usually has properties superior to those of a coating formed from a low-molecular-weight polymer, so that a high-molecular weight polymer is preferred for the aforesaid uses. However, a high-molecular weight polymer having a notable crosslinked structure is insoluble in various solvents and only swells with them so that such is difficult to process.

A high-molecular weight polymer usually has a high viscosity, which makes its emulsification difficult. Even if it is emulsified, its particle diameter cannot be made smaller below several microns and the resulting emulsion has poor stability over time. Therefore, improvement is desired on a water-based aqueous emulsion comprising a high-molecular weight polymer which forms a coating upon drying to remove water.

Patent Literature 1 describes a method for preparing an emulsion composition which forms a coating upon drying. More specifically, Patent Literature 1 describes a method of emulsifying a first linear component having two unsaturated carbon-carbon moieties, a second linear component having two Si-H portions moieties, and a third component having at least one condensation reactive group and two or less unsaturated carbon-carbon moieties or Si-H moieties; addition-polymerizing the resulting emulsion; and crosslinking the resulting polymer by a condensation reaction. However, the third component may act as a chain terminator in the addition polymerization so as to interfere with higher polymerization. It is empirically known that a polymer having a longer linear structure provides a coating with better slipping property. Therefore, improvement is desired.

Patent Literature 2 and 3 describe a method for ring opening polymerization of a cyclic siloxane oligomer in an emulsified state with a strong acid or a strong base. By the aforesaid method, a high polymerization degree polymer having a condensation reactive group, such as an alkoxy group, at the molecular chain terminal of the polymer is obtained. However, this method requires a long polymerization time and, therefore, high production costs. In recent years, a product having a smaller amount of octamethylcyclotetrasiloxane, decamethylcyclopentasiloxane and dodecamethylcyclohexasiloxane are demanded, but the organopolysiloxane obtained by the emulsion polymerization of a cyclic siloxane as described in Patent Literature 2 and 3 has a large amount of octamethylcyclotetrasiloxane, decamethylcyclopentasiloxane and dodecamethylcyclohexasiloxane.

### PRIOR LITERATURE

### PATENT LITERATURE

Patent Literature 1: Japanese National Phase Laying-Open No. 2017-538016
Patent Literature 2: Japanese Examined Patent Publication No. Sho34 (1959)-2041
Patent Literature 3: Japanese Examined Patent Publication No. Sho41 (1966)-13995

### SUMMARY OF THE INVENTION

### PROBLEMS TO BE SOLVED BY THE INVENTION

The present invention has been made in the aforesaid circumstances. One of the purposes of the present invention is to provide an emulsion composition which is stable over time and, upon drying, gives a coating with good slipping property. Another purpose of the present invention is to provide an emulsion composition containing a reduced or, in particular, zero amount of octamethylcyclotetrasiloxane, decamethylcyclopentasiloxane and dodecamethylcyclohexasiloxane as impurities.

### MEANS FOR SOLVING THE PROBLEMS

The present inventors conducted keen research to solve the aforesaid problems and established that, even when an organopolysiloxane has no condensation reactive group in an addition polymerizable organopolysiloxane composition, a hydrosilyl group is dehydrated into a condensation reactive group, such as a silanol group, which can condensation-react with a hydrolysable silane. In this reaction system, a silane having a condensation reactive group at the terminal does not need to be added as a chain terminator. Then, an emulsion composition comprising an organopolysiloxane having a longer chain length in the linear structure is provided. Further, a coating formed by drying an aqueous dispersion of an emulsion of a silicone obtained by the condensation reaction of the aforesaid organopolysiloxane contained in the emulsion composition with a hydrolysable silane compound which has a condensation reactive group has an excellent slipping property. Thus, the present invention is made.

That is, the present invention provides an aqueous dispersion comprising
an emulsion comprising a silicone which is a condensation reaction product of the following components (A-1) and (B):
   (A-1) a linear organopolysiloxane being the addition reaction product of (a1) a linear organopolysiloxane having two alkenylsilyl groups, each only being at each of the molecular terminals, and (a2) a linear organopolysiloxane having two hydrosilyl groups, each only being at each of the molecular terminals, provided that the ratio of the number of the hydrosilyl group in component (a2) to the number of the alkenylsilyl group in component (a1) is 0.98 to 2;
   5 to 40 parts by mass of (B) a hydrolysable silane having, in one molecule, at least three groups selected from the group consisting of a silanol group and an alkoxy group, relative to 100 parts by mass of component (A-1);
0.1 to 20 parts by mass of (A-2) a surfactant, relative to 100 parts by mass of component (A-1); and
10 to 200 parts by mass of (A-3) water, relative to 100 parts by mass of component (A-1).

The present invention also provides a coating made from the aforesaid silicone emulsion and a method for preparing the aqueous dispersion of the silicone emulsion.

### EFFECTS OF THE INVENTION

The aqueous dispersion of a silicone emulsion according to the present invention has good stability over time, forms a coating upon drying, which coating has an excellent slipping property. The aqueous dispersion of the silicone is useful as the main component, or as additives, for slipping agents, fiber treatment agents, and coating agents.

### DETAILED DESCRIPTION OF THE INVENTION

The present invention will be described below in more detail.

### (A-1) Linear organopolysiloxane

The linear organopolysiloxane (A-1) is the product of an addition reaction of (a1) a linear organopolysiloxane having two alkenylsilyl groups, each only being at each of the molecular terminals with (a2) a linear organopolysiloxane having two hydrosilyl groups, each only being at each of the molecular terminals.

Component (a1) is a linear organopolysiloxane having two alkenylsilyl groups, each only being at each of the molecular terminals. The linear organopolysiloxane is characterized in that the alkenylsilyl groups are only at both molecular terminals.

When the composition of the present invention is used in order to provide a slipping property to a coating, component (a1) preferably has no condensation reactive group. This is because, when the component has a condensation reactive group, crosslinking is introduced into the linear structure of the linear organopolysiloxane (A-1) in the condensation reaction with component (B), so that the chain length of the linear structure portion becomes shorter, which may lead to reduced slipping property. Examples of the condensation reactive group include alkoxy, oxime, carboxy, acetoxy, alkyleneoxy, amine, aminooxy, and amide groups, and a hydrocarbon group, such as methyl and ethyl groups, and those hydrocarbon groups wherein a part or all of the hydrogen atoms bonded to a carbon atom of these groups is substituted with any of the aforesaid functional groups.

Component (a1) is, for example, represented by the following formula (1). This linear organopolysiloxane may be used either alone or in combination thereof. 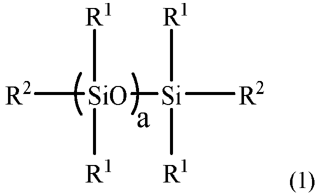 In the formula (1), R² is, independently of each other, an alkenyl group having 2 to 8 carbon atoms. R¹ is, independently of each other, a substituted or unsubstituted monovalent hydrocarbon group having 1 to 30 carbon atoms, precluding an alkenyl group; and "a" is a positive integer such that the kinematic viscosity at 25°C of the diorganopolysiloxane is 0.1 mm²/s or larger and less than 100,000 mm²/s, preferably 1 mm²/s or larger and less than 10,000 mm²/s, more preferably 1 mm²/s or larger and less than 1,000 mm²/s, still more preferably 10 mm²/s or larger and less than 500 mm²/s. In the present invention, the kinematic viscosity of the organopolysiloxane is determined at 25°C by an Ostwald viscometer.

R¹ is, independently of each other, a substituted or unsubstituted monovalent hydrocarbon group having 1 to 30 carbon atoms, preferably having 1 to 12 carbon atoms, precluding an alkenyl group. Examples of the monovalent hydrocarbon group include alkyl groups such as methyl, ethyl, propyl, butyl, pentyl, hexyl, heptyl, octyl, decyl, undecyl, dodecyl, tetradecyl, pentadecyl, hexadecyl, heptadecyl, octadecyl, nonadecyl, icosyl, henicosyl, docosyl, tricosyl, tetracyl, and triacontyl groups; aryl groups such as phenyl, tolyl, and naphthyl groups; aralkyl groups such as benzyl and phenethyl groups; and cycloalkyl groups such as cyclopentyl, cyclohexyl, and cycloheptyl groups; and those hydrocarbon groups wherein a part or all of the hydrogen atoms bonded to a carbon atom of these groups is substituted with an atom such as a halogen atom (a fluorine atom, a chlorine atom, a bromine atom, or an iodine atom). Particularly, 50 mol% or more of all the R¹ groups is a methyl group from the industrial standpoint.

R² is an alkenyl group having 2 to 8 carbon atoms, preferably 2 to 6 carbon atoms. Examples of the alkenyl group include vinyl, allyl, propenyl, butenyl, pentenyl, and hexenyl groups. Among these, a vinyl group is preferred from the industrial standpoint.

Component (a2) is a linear organopolysiloxane having two hydrosilyl groups, each only being at each of the molecular terminals. Like component (a1), when the composition of the present invention is used in order to add a slipping property to a coating, component (a1) preferably has no condensation reactive group. Component (a2) is, for example, represented by the following formula (2). The linear organopolysiloxane may be used either alone or in combination thereof. 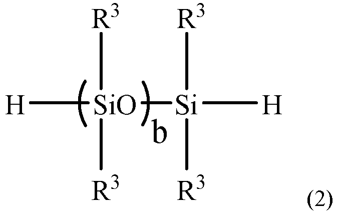 In the formula (2), R³ is, independently of each other, a substituted or unsubstituted monovalent hydrocarbon group having 1 to 30 carbon atoms, precluding an alkenyl group. Examples of R³ include the groups defined for R¹ above. Particularly, 50 mol% or more of the R³ groups is a methyl group from the industrial standpoint. "b" is a positive integer such that the kinematic viscosity of the diorganopolysiloxane at 25°C is 0.1 mm²/s or larger and less than 100,000 mm²/s, preferably 1 mm²/s or larger and less than 10,000 mm²/s, more preferably 1 mm²/s or larger and less than 1,000 mm²/s, still more preferably 10 mm²/s or larger and less than 500 mm²/s.

A mixed liquid obtained by mixing component (a1) and component (a2) preferably has a kinematic viscosity at 25°C of less than 100,000 mm²/s, more preferably 10,000 mm²/s or less, still more preferably 1,000 mm²/s or less. If the kinematic viscosity of the mixed liquid is more than the aforesaid upper limit, the particle diameter of the resulting emulsion is not easily made smaller.

The mass ratio of the aforesaid component (a2) to the aforesaid component (a1) is preferably such that the ratio of the number of the hydrosilyl group in component (a2) to the number of the alkenylsilyl group in component (a1) is 0.98 to 2, more preferably 1 to 1.5. When the ratio of the number of the hydrosilyl group to the number of the alkenylsilyl group is in the aforesaid range, the hydrosilyl group present in excess forms a silanol group by a dehydrogenation reaction. The silanol group formed in component (A-1) condensation-reacts with the hydrolysable silane (B) to provide an improved coating formation property. If the ratio of the number of the hydrosilyl group to the number of the alkenylsilyl group is less than the aforesaid lower limit, the proportion of the alkenylsilyl group at the molecular chain terminal of component (A-1) is larger and the proportion of the hydrosilyl group which forms a silanol group by the dehydrogenation reaction is lower. Therefore, a condensation reaction of component (A-1) with component (B) occurs less, so that the coating formation property may be lower. In addition, the number of the terminal hydrosilyl group in component (a2) decreases by the dehydrogenation reaction simultaneously with the addition polymerization of components (a1) and (a2) and, therefore, the addition polymerization may not proceed sufficiently, the polymerization degree of component (A-1) may be lower, and the slipping property of a coating may be lower.

Components (a1) and (a2) may contain octamethylcyclotetrasiloxane, decamethylcyclopentasiloxane, and dodecamethylcyclohexasiloxane as an impurity, but the amount of each of them is preferably 1000 mass ppm or less, particularly preferably 500 mass ppm or less, relative to the total mass of components (a1) and (a2). The lower limit is not particularly limited and is preferably as small as possible and, therefore, may be 0 mass ppm.

Component (A-1) is the product of an addition reaction of the aforesaid components (a1) and (a2). Any known platinum group metal catalyst may be used for the addition reaction. Examples of the catalyst include elemental platinum group metals, such as platinum (including platinum black), rhodium, and palladium; platinum chloride, chloroplatinic acid, and chloroplatinates such as H₂PtCl₄·kH₂O, H₂PtCl₆·kH₂O, NaHPtCl₆·kH₂O, KHPtCl₆·kH₂O, Na₂PtCl₆·kH₂O, K₂PtCl₄·kH₂O, PtCl₄·kH₂O, PtCl₂, and Na₂HPtCl₄·kH₂O (wherein k is an integer of 0 to 6, preferably 0 or 6); an alcohol-modified chloroplatinic acid (described in US Patent No. 3,220,972); a complex of platinum chloride or chloroplatinic acid with an olefin (described in US Patent No. 3,159,601, US Patent No. 3,159,662, and US Patent No. 3,775,452), a complex of platinum with an olefin, a complex of chloroplatinic acid with a vinyl group-containing siloxane, and a complex of platinum with a vinyl group-containing siloxane; a platinum group metal such as platinum black and palladium, supported on a carrier such as alumina, silica, and carbon; a rhodium-olefin complex; and chlorotris(triphenylphosphine) rhodium (Wilkinson catalyst).

The amount of the platinum group metal catalyst may be an effective amount to promote the addition reaction. For example, in the platinum-containing catalyst, the amount of catalyst is such that the amount of the platinum may be about 0.1 to 100 ppm (mass), preferably about 0.5 to 50 ppm, more preferably about 1 to 30 ppm, relative to the total mass of components (a1) and (a2).

### (A-2) Surfactant

The surfactant (A-2) functions as a dispersing agent for the linear organopolysiloxane (A-1). In the preparation method comprising the steps of emulsifying components (a1) and (a2) in water in the presence of the surfactant and then adding the platinum group metal catalyst to the resulting emulsion to conduct an addition reaction, the surfactant may function also as an emulsifying agent for the emulsification of components (a1) and (a2) and a dispersing agent of the platinum group metal catalyst.

As the surfactant, a nonionic surfactant, a cationic surfactant, an anionic surfactant, and an amphoteric surfactant may be used either alone or in combination thereof.

Examples of the nonionic surfactant include polyoxyethylene alkyl ethers, polyoxyethylene polyoxypropylene alkyl ethers, polyoxyethylene alkyl phenyl ethers, polyethylene glycol fatty acid esters, polyoxyethylene sorbitan fatty acid esters, polyoxyethylene sorbitol fatty acid esters, polyoxyethylene glycerin fatty acid esters, polyglycerin fatty acid esters, propylene glycol fatty acid esters, polyoxyethylene castor oils, polyoxyethylene hydrogenated castor oils, polyoxyethylene hydrogenated castor oil fatty acid esters, polyoxyethylene alkylamines, polyoxyethylene fatty acid amides, polyoxyethylene-modified organopolysiloxanes, and polyoxyethylene polyoxypropylene modified organopolysiloxanes. When two or more kinds of nonionic surfactant are used in combination, a nonionic surfactant comprising no polyether, such as sorbitan fatty acid ester or glycerin fatty acid ester may also be used in combination.

Examples of the cationic surfactant include, but is not limited to, ammonium group-containing surfactants such as alkyl dimethyl ammonium halides and compounds represented by the formula: R⁴R⁵R⁶R⁷N⁺X⁻ (wherein, R⁴, R⁵, R⁶, and R⁷ are, independently of each other, a group selected from alkyl, aryl, alkylalkoxy, arylalkoxy, and alkoxy groups and X is an anion such as halogen).

Examples of the anionic surfactant include alkyl sulfate ester salts, polyoxyethylene alkyl ether sulfate ester salts, polyoxyethylene alkyl phenyl ether sulfate ester salts, sulfate ester salts of a fatty acid alkylol amide, alkylbenzene sulfonates, polyoxyethylene alkyl phenyl ether sulfonates, α-olefin sulfonates, α-sulfo-fatty acid ester salts, alkyl naphthalene sulfonic acids, alkyl diphenyl ether disulfonates, alkane sulfonates, N-acyl taurates, dialkyl sulfosuccinates, monoalkyl sulfosuccinates, polyoxyethylene alkyl ether sulfosuccinates, fatty acid salts, polyoxyethylene alkyl ether carboxylates, N-acyl amino acid salts, monoalkyl phosphate ester salts, dialkyl phosphate ester salts, and polyoxyethylene alkyl ether phosphate ester salts. Examples of the salt include sodium salts, potassium salts, ammonium salts, and triethanolamine salts.

Examples of the amphoteric surfactant include amphoteric derivatives of a secondary and/or tertiary amine having anionic groups, betaine derivatives, and combinations thereof.

In particular, amine-containing compounds may detract the action of the aforesaid platinum group metal catalyst, so that the nonionic surfactants and anionic surfactants are preferred. Further, the nonionic surfactant may lower the coating formability of the emulsion, so that the anionic surfactants are more preferred.

The amount of the surfactant (A-2) is 0.1 to 20 parts by mass, preferably 0.5 to 10 parts by mass, relative to 100 parts by mass of the linear organopolysiloxane (A-1). If the amount is less than 0.1 part by mass, the particle diameter may be larger or the emulsification may be prevented in the emulsification step of component (A-1) described later in detail.

### (A-3) Water

Water (A-3) is a dispersion medium for the linear organopolysiloxane (A-1). The amount of component (A-3) is 10 to 200 parts by mass, preferably 25 to 150 parts by mass, relative to 100 parts by mass of component (A-1). If the amount is less than 10 parts by mass, the viscosity of the water-based silicon dispersion may be higher, so that the preparation or handling of the dispersion may be difficult.

### Method for preparing an emulsion composition comprising the linear organopolysiloxane (A-1)

After components (a1) and (a2) are emulsified in water (A-3) in the presence of the surfactant (A-2), the platinum group metal catalyst is added to the resulting emulsion to cause an addition reaction to obtain an emulsion of the linear organopolysiloxane (A-1). The emulsification may be carried out by a general emulsifier and disperser. Examples of the emulsifier and disperser include a high-speed rotational centrifugal radiation-type stirrer such as homodisper, a high-speed rotational shearing type stirrer such as homomixer, a high-pressure jetting type emulsifier and disperser such as pressure-type homogenizer, a colloid mill, and an ultrasonic emulsifier.

The platinum group metal catalyst may be added after the emulsification step as described above, but it may be dissolved in the raw material of component (A-1) (that is, a mixture of components (a1) and (a2)) in advance. When the platinum group metal catalyst is added after the emulsification step, the catalyst may be dissolved in a solvent and then added. When the platinum group metal catalyst has poor dispersibility in water, the catalyst is preferably dissolved in the nonionic surfactant and then added to the emulsion. When the platinum group metal catalyst is dissolved in the raw material of component (A-1) in advance, the mixture may be cooled, for example, at a temperature as low as 5°C or lower so as to prevent an addition reaction from occurring before the emulsification step is completed. The addition reaction may be conducted, for example, at 10 to 60°C. If the reaction does not complete, the reaction may be conducted under heating below 100°C. The stirring time in the reaction is not particularly limited and is usually 1 to 24 hours.

The linear organopolysiloxane (A-1) has an absolute viscosity at 25°C of 10,000 mPa·s or more, preferably 100,000 mPa·s or more, more preferably 1,000,000 mPa·s or more. An upper limit is not limited and may be, for example, 10,000,000 mPa·s or more. Alternatively, the organopolysiloxane is dried and then dissolved in toluene into a 30% toluene solution. The solution has an absolute viscosity at 25°C of 30 mPa·s or more, preferably 100 mPa·s or more, still more preferably 1,000 mPa·s or more. An upper is not limited. The viscosity of the 30% toluene solution of the aforesaid linear organopolysiloxane is determined with a rotational viscometer. When the viscosity of the linear organopolysiloxane is higher, the viscosity of the 30% toluene solution is higher. For example, the viscosity of 30% solution of a linear organopolysiloxane having an absolute viscosity of 10,000 mPa·s is about 30 mPa·s; the viscosity of 30% solution of a linear organopolysiloxane having an absolute viscosity of 100,000 mPa·s is about 150 mPa·s; and the viscosity of 30% solution of a linear organopolysiloxane having an absolute viscosity of 1,000,000 mPa·s is about 1,100 mPa·s.

In the emulsion composition of the linear organopolysiloxane (A-1), the amount of each of octamethylcyclotetrasiloxane, decamethylcyclopentasiloxane and dodecamethylcyclohexasiloxane contained as an impurity in components (a1) and (a2) is preferably 1,000 ppm or less, particularly preferably 500 ppm or less, as described above. The amount of each of octamethylcyclotetrasiloxane, decamethylcyclopentasiloxane and dodecamethylcyclohexasiloxane is preferably as small as possible, so that the lower limit is preferably 0 ppm.

### Aqueous dispersion of the silicone emulsion

The present invention provides an aqueous dispersion of the emulsion comprising the silicone obtained by condensation reaction of the linear organopolysiloxane (A-1) with a hydrolysable silane (B). The aqueous dispersion may optionally comprise a condensation catalyst (C).

### (B) Hydrolysable silane compound

Component (B) is a hydrolysable silane compound having at least three silanol groups and/or alkoxy groups in one molecule. Component (B) is, for example, a compound represented by the following formula (3). This silane compound may be used either alone or in combination thereof.

Si(OR⁸)_{c}R⁹_{4-c} (3)

In the formula (3), R⁸ is, independently of each other, a hydrogen atom or a substituted or unsubstituted monovalent hydrocarbon group having 1 to 30 carbon atoms, "c" is 3 or 4, and R⁹ is, independently of each other, a substituted or unsubstituted monovalent hydrocarbon group having 1 to 30 carbon atoms.

R⁸ is, independently of each other, a hydrogen atom or a substituted or unsubstituted monovalent hydrocarbon group having 1 to 30 carbon atoms, preferably 1 to 12 carbon atoms, more preferably 1 to 5 carbon atoms. Examples of the monovalent hydrocarbon group include alkyl groups such as methyl, ethyl, propyl, butyl, pentyl, hexyl, heptyl, octyl, nonyl, and decyl groups. Among these, methyl, ethyl, and propyl groups are preferred. If R⁸ has a larger molecular structure, the condensation reaction rate may be lower due to steric hindrance.

R⁹ is, independently of each other, a substituted or unsubstituted monovalent hydrocarbon group having 1 to 30 carbon atoms. Examples of R⁹ include alkyl groups such as methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and eicosyl groups; cycloalkyl groups such as cyclobutyl, cyclopentyl, cyclohexyl, and cycloheptyl groups; aryl groups such as phenyl, tolyl, and naphthyl groups; aralkyl groups such as benzyl, phenethyl, and β-phenylpropyl groups; and alkenyl groups such as viny and allyl groups; and those hydrocarbon groups wherein a part or all of the hydrogen atoms bonded to a carbon atom of these groups is substituted with an atom such as a halogen atom (a fluorine, chlorine, bromine, or iodine atom) and/or a substituent such as an acryloyloxy, methacryloyloxy, epoxy, glycidoxy, amino, mercapto, or carboxyl group.

The amount of component (B) is 5 to 40 parts by mass, preferably 8 to 35 parts by mass, more preferably 10 to 30 parts by mass, relative to 100 parts by mass of the linear organopolysiloxane (A-1). If the amount is less than the aforesaid lower limit, a sufficient amount of a condensation reactive group to form a coating is not introduced and the coating formability is lower.

### (C) Condensation catalyst

Component (C) is a condensation catalyst. The condensation catalyst is not particularly limited and any known condensation catalyst may be used. Examples of the condensation catalyst include organic acid salts of a metal, such as magnesium acetate, zinc formate, zinc acetate, zirconium acetate, zinc octylate, cobalt octylate, lead octylate, tetraisopropyl titanate, tetrabutyl titanate, dibutyltin diacetate, dibutyltin dilaurate, dibutyltin dioctoate, dioctyltin diacetate, dioctyltin dioctoate, dioctyltin dilaurate, and dioctyltin maleate; organic acid salts of an organic metal, and combinations thereof.

In another embodiment, the present composition may not necessarily be an organic metal catalyst. Examples of the catalyst other than organic metal catalyst include acidic substances such as carboxylic acids such as acetic acid and oxalic acid, phosphoric acid, hydrochloric acid, and sulfuric acid; alkaline substances such as alkali metal hydroxides such as potassium hydroxide and sodium hydroxide, alkaline earth metal hydroxides such as calcium hydroxide and barium hydroxide, alkali metal carbonates such as potassium carbonate and sodium carbonate, aqueous ammonia, and amines such as triethanolamine; and combinations thereof. The amount of the acidic substance or alkaline substance is not particularly limited and may be an effective amount to promote the condensation reaction. A neutralizer may be added to neutralize the acidic substance or alkaline substance added.

In the present invention, the condensation catalyst is an optional component and may be omitted. For example, when component (B) has a functional group, such as an amino group, which acts as a catalyst, condensation curing may occur without a condensation catalyst. Sometimes, a composition comprising no catalyst is preferred, depending on the material of a substrate to be coated. Therefore, the presence or absence of the catalyst may be selected as needed according to the material of a substrate. When the present composition comprises component (C), its amount is not particularly limited and may be a catalytic amount to promote the condensation reaction. The preferred amount is 20 parts by mass or less, more preferably 16 parts by mass or less, relative to 100 parts by mass of the linear organopolysiloxane (A-1). The lower limit may be, for example, 0.01 part by mass, preferably 0.1 part by mass or more.

### Other components

The aqueous dispersion of the present invention may comprise a water-soluble high-molecular weight compound for the purpose of improving the dispersibility of the linear organopolysiloxane (A-1). The water-soluble high-molecular weight compound is not particularly limited and may be, for instance, nonionic water-soluble high-molecular weight compounds, anionic water-soluble high-molecular weight compounds, cationic water-soluble high-molecular weight compounds, and amphoteric water-soluble high-molecular weight compounds.

Examples of the nonionic water-soluble high-molecular weight compounds include polymers of vinyl alcohol, copolymers of vinyl alcohol and vinyl acetate, polymers of acrylamide, polymers of vinyl pyrrolidone, copolymers of vinyl pyrrolidone and vinyl acetate, polyethylene glycol, polymers of isopropylacrylamide, polymers of methyl vinyl ether, starch, methyl cellulose, hydroxyethyl cellulose, hydroxypropyl cellulose, guar gum, and xanthan gum.

Examples of the anionic water-soluble high-molecular weight compounds include polymers of sodium acrylate, copolymers of sodium acrylate and sodium maleate, copolymers of sodium acrylate and acrylamide, polymers of sodium styrenesulfonate, copolymers of sodium polyisoprenesulfonate and styrene, polymers of sodium naphthalenesulfonate, carboxymethyl starch, starch phosphate, carboxymethyl cellulose, sodium alginate, gum arabic, carrageenan, sodium chondroitin sulfate, and sodium hyaluronate.

Examples of the cationic water-soluble high-molecular weight compounds include polymers of dimethyl diallyl ammonium chloride, polymers of vinyl imidazoline, polymers of methyl vinyl imidazolium chloride, polymers of acrylic acid ethyl trimethyl ammonium chloride, polymers of methacrylic acid ethyl trimethyl ammonium chloride, polymers of acrylamidopropyl trimethyl ammonium chloride, polymers of methacrylamidopropyl trimethyl ammonium chloride, epichlorohydrin/dimethylamine polymers, polymers of ethyleneimine, quaternized ethyleneimine polymers, polymers of allylamine hydrochloride, polylysine, cationic starches, cationized celluloses, and chitosan, and derivatives obtained by copolymerizing the aforesaid compounds with a monomer having a nonionic group or an anionic group.

Examples of the amphoteric water-soluble high-molecular weight compounds include copolymers of acrylic acid ethyl trimethyl ammonium chloride, acrylic acid, and acrylamide, copolymers of methacrylic acid ethyl trimethyl ammonium chloride, acrylic acid, and acrylamide, and Hofmann degradation products of a polymer of acrylamide.

The aqueous dispersion of the present invention may comprise an antimicrobial, antiseptic agent or an antibacterial agent. Examples of the antimicrobial, antiseptic agent include alkyl paraoxybenzoate esters, benzoic acid, sodium benzoate, sorbic acid, potassium sorbate, and phenoxyethanol and examples of the antibacterial agent include benzoic acid, salicylic acid, carbolic acid, sorbic acid, alkyl paraoxybenzoate esters, parachlorometacresol, hexachlorophene, benzalkonium chloride, chlorohexidine chloride, trichlorocarbanilide, photosensitizers, and phenoxyethanol.

### Method for preparing the aqueous dispersion of the silicone emulsion

The present invention further provides a method for preparing the aqueous dispersion of the emulsion comprising the silicone which is the condensation reaction product of the aforesaid linear organopolysiloxane (A-1) and the hydrolysable silane (B).

The preparation method comprises the steps of emulsifying the linear organopolysiloxane having two alkenylsilyl groups, each only being at each of the molecular terminals (a1) and the linear organopolysiloxane having two hydrosilyl groups, each only being at each of the molecular terminals (a2) in the presence of the surfactant (A-2) and water (A-3), and addition reacting them to obtain the emulsion composition (A) comprising the linear organopolysiloxane (A-1); and then mixing the emulsion composition (A) with the hydrolysable silane (B) having at least three silanol groups and/or alkoxy groups in one molecule and, optionally, a condensation catalyst (C), to cause a condensation reaction of component (B) with the linear organopolysiloxane (A-1) so as to obtain the aqueous dispersion of the silicone emulsion. Thus, the aqueous dispersion of the silicone emulsion according to the present invention is obtained by mixing the emulsion composition (A) prepared in advance and the aforesaid hydrolysable silane (B) and, optionally, the condensation catalyst (C). In the mixing step, the condensation reaction proceeds to obtain the silicone emulsion. The aforesaid linear organopolysiloxane (A-1) has a structure in which a part of the hydrosilyl groups present at both terminals of the molecular chain of component (a2) becomes a silanol group by a dehydrogenation reaction. The silanol group in component (A-1) and the condensation-reactive group (that is, the silanol group and/or alkoxy group) in component (B) condensation-reacts to form a crosslinked structure.

In the preparation of the aqueous dispersion of the silicone emulsion, the amount of component (B) is 5 to 40 parts by mass as described above, preferably 8 to 35 parts by mass, more preferably 10 to 30 parts by mass, relative to 100 parts by mass of the linear organopolysiloxane (A-1). The amount of component (B) is preferably 2 to 20 parts by mass, more preferably 2.5 to 15 parts by mass, relative to 100 parts by mass of the emulsion composition. The amount of the condensation catalyst (C) may be preferably 20 parts by mass or less as described above, more preferably 16 parts by mass or less, relative to 100 parts by mass of the linear organopolysiloxane (A-1). The lower limit may be, for example, 0.01 parts by mass or more, preferably 0.1 parts by mass or more. The amount may be preferably 10 parts by mass or less, more preferably 8 parts by mass or less, relative to 100 parts by mass of the emulsion composition. The lower limit is, for example, preferably 0.01 parts by mass or more, more preferably 0.05 parts by mass or more.

The aqueous dispersion of the silicone emulsion is dried to remove water to form a coating composed of the silicone. Since the linear organopolysiloxane has the condensation reactive group only at the terminal, the silicone emulsion forms a crosslinked structure having a long chain, and the coating obtained therefrom has an improved slipping property.

The aforesaid mixing and condensation reaction steps may be carried out, for example, at 5 to 60°C. When the reaction is not completed, it may be carried out under heating at less than 100°C. The stirring time for the reaction is not particularly limited and is usually 1 to 48 hours.

Dispersed particles of the silicone emulsion in the aqueous dispersion preferably have a volume average particle diameter of 1,000 nm or less, more preferably 700 nm or less. The lower limit is not particularly limited and is about 30 nm or more. The volume average particle diameter is the median diameter as determined by a laser diffraction/scattering particle diameter distribution analyzer, LA-960 (ex Horiba, Ltd.).

The aqueous dispersion of the silicone emulsion thus obtained is then dried to remove water and, thereby, form a coating. The drying conditions are not particularly limited as far as the temperature and time are sufficient to remove water and form a coating. For example, water is removed to form a coating in the conditions of 105°C for 3 hours or 150°C for 5 minutes. The coating formed by the drying step has an excellent slipping property, so that the present aqueous dispersion is suited for preparing a slipping agent, a fiber treatment agent, or a coating agent. A coating obtained from the silicone emulsion of the present invention improves the feeling of plastics, rubbers, coating of a leather, or fibers. The aqueous dispersion of the present invention is suited, for example, as a rubber coating material.

### EXAMPLES

The present invention will be hereinafter described more specifically with reference to the following Examples and Comparative Examples, but the present invention is not limited by the following Examples. Hereinafter, "part" represents part by mass and the kinematic viscosity of the raw material organopolysiloxanes (a1) and (a2) is determined at 25°C by an Ostwald viscometer.

Components (a1) and (a2) used in the following Examples and Comparative Examples are as follows.

(a1-1) Alkenylsilyl group-containing organopolysiloxane which is represented by the following formula (4), has a viscosity at 25°C of 126 mm²/s and a vinyl value of 0.035 mol/100 g, and contains 100 ppm or less of each of octamethylcyclotetrasiloxane, decamethylcyclopentasiloxane and dodecamethylcyclohexasiloxane. 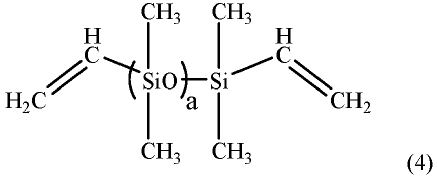 wherein "a" is the number to give the viscosity at 25°C of 126 mm²/s.

(a1-2) Alkenylsilyl group-containing organopolysiloxane which is represented by the aforesaid formula (4), has a viscosity at 25°C of 8 mm²/s and a vinyl value of 0.215 mol/100 g and contains 100 ppm or less of each of octamethylcyclotetrasiloxane, decamethylcyclopentasiloxane and dodecamethylcyclohexasiloxane.

(a2-1) Hydrosilyl group-containing organopolysiloxane which is represented by the following formula (5), has a viscosity at 25°C of 47 mm²/s and a hydrogen value of 0.066 mol/100 g and contains 100 ppm or less of each of octamethylcyclotetrasiloxane, decamethylcyclopentasiloxane and dodecamethylcyclohexasiloxane. 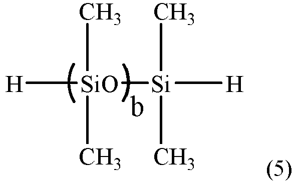 wherein "b" is the number to give the viscosity at 25°C of 47 mm²/s.

(a2-2) Hydrosilyl group-containing organopolysiloxane which is represented by the aforesaid formula (5), has a viscosity at 25°C of 114 mm²/s and a hydrogen value of 0.033 mol/100 g and contains 100 ppm or less of each of octamethylcyclotetrasiloxane, decamethylcyclopentasiloxane and dodecamethylcyclohexasiloxane.

### Preparation Example 1

### Preparation of emulsion composition 1

63.0 parts of the alkenylsilyl group-containing organopolysiloxane (a1-1), 37.0 parts of the hydrosilyl group-containing organopolysiloxane (a2-1) (in the ratio of the number of the Si-H group to the number of the Si-Vi group of 1.10), 1.1 parts of sodium lauryl phosphate (A-2) (NIKKOL SLP-N, ex Nikko Chemicals Co., Ltd.), and 28.6 parts of water (A-3) were emulsified with a homomixer, which was diluted with 83.9 parts of water (A-3) and dispersed with the homo-mixer, and then subjected to a high-pressure treatment once at a pressure of 100 MPa by a high-pressure emulsifier to obtain an emulsion.

To the resulting emulsion, was added a mixture of 0.16 parts of a solution of a platinum/vinyl group-containing siloxane complex in isododecane (platinum content was 0.5%) and 0.16 parts of polyoxyethylene lauryl ether (Emulgen 109P, ex Kao Corporation). The mixture was stirred for 12 hours to progress an addition reaction of components (a1-1) and (a2-1) to, thereby, obtain emulsion composition 1 comprising a linear organopolysiloxane.

### Example 1

### Preparation of aqueous dispersion 1 of a silicone emulsion

4.6 parts of vinyltriethoxysilane (B) were added to 100 parts of emulsion composition 1 obtained in Preparation Example 1 and stirred at room temperature for 30 minutes to which a solution of 0.56 parts of 3-aminopropyltriethoxysilane (B) and 2.8 parts of vinyltriethoxysilane (B) was then added. The resulting mixture was stirred at room temperature for one hour to progress a condensation reaction to, thereby, obtain aqueous dispersion 1 of a silicone emulsion.

In the Examples and the Comparative Examples, the room temperature means 25°C ± 5°C.

### Example 2

### Preparation of aqueous dispersion 2 of a silicone emulsion

2.3 parts of vinyltriethoxysilane (B) were added to 100 parts of emulsion composition 1 obtained in Preparation Example 1 and stirred at room temperature for 30 minutes to which a mixed solution of 0.56 part of 3-aminopropyltriethoxysilane (B) and 2.8 parts of vinyltriethoxysilane (B) were then added. The resulting mixture was stirred at room temperature for one hour to progress a condensation reaction to, thereby, obtain aqueous dispersion 2 of a silicone emulsion.

### Preparation Example 2

63.0 parts of the alkenylsilyl group-containing organopolysiloxane (a1-1), 37.0 parts of the hydrosilyl group-containing organopolysiloxane (a2-1) (in the ratio of the number of the Si-H group to the number of the Si-Vi group of 1.10), 4.7 parts of sodium polyoxyethylene lauryl ether acetate (A-2) (KAO AKYPO RLM-45NV, ex Kao Corporation), and 25.0 parts of water (A-3) were emulsified with a homomixer, which was diluted with 83.9 parts of water (A-3) and dispersed the homo-mixer, and then subjected to a high-pressure treatment once at a pressure of 100 MPa by a high-pressure emulsifier to obtain an emulsion.

To the resulting emulsion, was added a mixture of 0.16 parts of a solution of a platinum/vinyl group-containing siloxane complex in isododecane (platinum content was 0.5%) and 0.16 parts of polyoxyethylene lauryl ether (Emulgen 109P, ex Kao Corporation). The resulting mixture was stirred for 12 hours to progress an addition reaction of components (a1-1) and (a2-1) to, thereby, obtain emulsion composition 2 comprising a linear organopolysiloxane.

### Example 3

### Preparation of aqueous dispersion 3 of a silicone emulsion

4.6 parts of vinyltriethoxysilane (B) were added to 100 parts of emulsion composition 2 obtained in Preparation Example 2 and stirred at room temperature for 30 minutes to which a mixed solution of 0.56 parts of 3-aminopropyltriethoxysilane (B) and 2.8 parts of vinyltriethoxysilane (B) were then added. The resulting mixture was stirred at room temperature for one hour to progress a condensation reaction to, thereby, obtain aqueous dispersion 3 of a silicone emulsion.

### Example 4

### Preparation of aqueous dispersion 4 of a silicone emulsion

5.6 parts of vinyltriethoxysilane (B) were added to 100 parts of emulsion composition 1 obtained in Preparation Example 1 and stirred at room temperature for 30 minutes, to which 0.7 parts of a 9.8% aqueous solution of sulfuric acid was added and the resulting mixture was stirred at room temperature for four hours. Then 0.74 parts of a 10% aqueous solution of sodium bicarbonate was added. The mixture was stirred at room temperature for 15 minutes to progress a condensation reaction to, thereby, obtain aqueous dispersion 4 of a silicone emulsion.

### Example 5

### Preparation of aqueous dispersion 5 of a silicone emulsion

5.6 parts of phenyltriethoxysilane (B) were added to 100 parts of emulsion composition 1 obtained in Preparation Example 1 and stirred at room temperature for one hour to which 1.2 parts of an emulsion composition of dioctyltin dineodecanoate (tin content was 7.4%) were then added. The resulting mixture was stirred at room temperature for 15 minutes to cause a condensation reaction and,, thereby obtain aqueous dispersion 5 of a silicone emulsion.

### Preparation Example 3

### Preparation of emulsion composition 3

12.3 parts of the alkenylsilyl group-containing organopolysiloxane (a1-2), 87.7 parts of the hydrosilyl group-containing organopolysiloxane (a2-2) (in the ratio of the number of the Si-H group to the number of the Si-Vi group of 1.10), 1.1 parts of sodium lauryl phosphate (A-2) (NIKKOL SLP-N, ex Nikko Chemicals Co., Ltd.), and 28.6 parts of water (A-3) were emulsified with a homomixer, which was diluted with 83.9 parts of water (A-3) and dispersed the homo-mixer, and then subjected to a high-pressure treatment once at a pressure of 100 MPa by a high-pressure emulsifier to obtain an emulsion.

To the resulting emulsion, was added a mixture of 0.16 part of an isododecane solution of a platinum/vinyl group-containing siloxane complex (platinum content was 0.5%) and 0.16 parts of polyoxyethylene lauryl ether (Emulgen 109P, ex Kao Corporation). The mixture was stirred for 12 hours to progress an addition reaction of components (a1-2) and (a2-2) to, thereby, obtain emulsion composition 3 comprising a linear organopolysiloxane.

### Example 6

### Preparation of aqueous dispersion 6 of a silicone emulsion

4.6 parts of vinyltriethoxysilane (B) were added to 100 parts of emulsion composition 6 obtained in Preparation Example 3 and stirred at room temperature for 30 minutes to which a solution of 0.56 parts of 3-aminopropyltriethoxysilane (B) and 2.8 parts of vinyltriethoxysilane (B) were then added. The resulting mixture was stirred at room temperature for one hour to progress a condensation reaction to, thereby, obtain aqueous dispersion 6 of a silicone emulsion.

### Comparative Example 1

### Preparation of aqueous dispersion 7 of a silicone emulsion

To 100 parts of (A) emulsion composition 1 obtained in Preparation Example 1, was added a mixed solution of 0.56 parts of 3-aminopropyltriethoxysilane (B) and 1.12 parts of vinyltriethoxysilane (B). The resulting mixture was stirred at room temperature for one hour to progress a condensation reaction to, thereby, obtain aqueous dispersion 7 of a silicone emulsion.

### Comparative Preparation Example

66.3 parts of the alkenylsilyl group-containing organopolysiloxane (a1-1), 33.7 parts of the hydrosilyl group-containing organopolysiloxane (a2-1) (in the ratio of the number of the Si-H group to the number of the Si-Vi group of 0.95), 1.1 parts of sodium lauryl phosphate (A-2) (NIKKOL SLP-N, ex Nikko Chemicals Co., Ltd.), and 28.6 parts of water (A-3) were emulsified with a homomixer, which was diluted with 83.9 parts of water (A-3) and dispersed the homo-mixer, and then subjected to a high-pressure treatment once at a pressure of 100 MPa by a high-pressure emulsifier to obtain an emulsion.

To the resulting emulsion, was added a mixture of 0.16 parts of a solution of a platinum/vinyl group-containing siloxane complex in isododecane (platinum content was 0.5%) and 0.16 parts of polyoxyethylene lauryl ether (Emulgen 109P, ex Kao Corporation). The resulting mixture was stirred for 12 hours to progress an addition reaction of components (a1-1) and (a2-1) and, thereby, obtain emulsion composition 4 comprising a linear organopolysiloxane.

### Comparative Example 2

### Preparation of aqueous dispersion 8 of a silicone emulsion

To 100 parts of emulsion composition 4 obtained in the Comparative Preparation Example, were added 4.6 parts of vinyltriethoxysilane (B). The resulting mixture was stirred at room temperature for 30 minutes, and then a mixed solution of 0.56 parts of 3-aminopropyltriethoxysilane (B) and 2.8 parts of vinyltriethoxysilane (B) was then added. The resulting mixture was stirred at room temperature for one hour to progress a condensation reaction to, thereby, obtain aqueous dispersion 8 of a silicone emulsion.

### Comparative Example 3

### Preparation of aqueous dispersion 9 of a silicone emulsion

An aqueous solution obtained by dissolving 6.0 parts of dodecylbenzenesulfonic acid (NEOPELEX GS-P, ex Kao Corporation) in 34.0 parts of water was added to 100 parts of octamethylcyclotetrasiloxane and emulsified with a homo-mixer, which was diluted with 60.0 parts of water and dispersed with the homo-mixer, and then subjected to a high-pressure treatment once at a pressure of 100 MPa by a high-pressure emulsifier. The emulsion thus obtained was stirred at 70°C ± 5°C for 6 hours, then stirred at 15°C ± 2°C for 12 hours. To the emulsion, 11.0 parts of a 10% aqueous solution of sodium carbonate was added so as to neutralize to, thereby, obtain emulsion composition 5.

To 100 parts of emulsion composition 5 thus obtained, were added 5.6 parts of vinyltriethoxysilane (B) and was stirred at room temperature for 30 minutes, and then to which a mixture of 0.68 parts of 3-aminopropyltriethoxysilane (B) and 3.4 parts of vinyltriethoxysilane (B) was added. The resulting mixture was stirred at room temperature for one hour to progress a condensation reaction to, thereby, obtain aqueous dispersion 9 of a silicone emulsion.

### Comparative Example 4

### Preparation of aqueous dispersion 10 of a silicone emulsion

An aqueous solution obtained by dissolving 6.0 parts of dodecylbenzenesulfonic acid (NEOPELEX GS-P, ex Kao Corporation) in 34.0 parts of water was added to a mixture of 99.6 parts of octamethylcyclotetrasiloxane and 0.36 parts of phenyltriethoxysilane, emulsified with a homo-mixer, which was diluted with 60.0 parts of water and dispersed with the homo-mixer, and then subjected to a high-pressure treatment once at a pressure of 100 MPa by a high-pressure emulsifier. The emulsion thus obtained was stirred at 70°C ± 5°C for 6 hours, and then at 15°C ± 2°C for 12 hours. To the emulsion, 11.0 parts of a 10% aqueous solution of sodium carbonate was added to neutralize to, thereby, obtain emulsion composition 6.

5.6 parts of vinyltriethoxysilane (B) were added to 100 parts of emulsion composition 6 and was stirred for 30 minutes, to which a solution of 0.68 parts of 3-aminopropyltriethoxysilane (B) and 3.4 parts of vinyltriethoxysilane (B) was then added. The resulting mixture was stirred for one hour to obtain aqueous dispersion 10 of a condensation curable silicone.

The physical properties of the emulsion compositions and aqueous dispersions of a silicone emulsion were determined or evaluated according to the following methods. The results are as shown in Table 1.

### Viscosity of a 30% toluene solution of organopolysiloxane (A-1) extracted from each of the emulsion compositions 1 to 6

150 grams of isopropyl alcohol was added to 100 g of each of the emulsion compositions 1 to 6 obtained in Preparation Examples 1 to 3, Comparative Preparation Example, and Comparative Examples 3 and 4, and then the mixture was stirred well. The precipitated organopolysiloxane was collected and dried at 105°C for 3 hours. Then 30 g of the organopolysiloxane was dissolved in 70 g of toluene. The absolute viscosity at 25°C of the aforesaid 30% toluene solution was determined with a rotational viscometer.

### Volume average particle diameter of the emulsion

The median diameter of the particles of the emulsion contained in each of the aqueous dispersions 1 to 10 of silicone emulsion was determined using a laser diffraction/scattering type particle diameter distribution analyzer LA-960 (ex Horiba Ltd.).

### Amounts of cyclic siloxanes contained in the organopolysiloxane

0.1 grams of the aqueous dispersion of the silicone emulsion were subjected to extraction with 10 ml of acetone containing 20 mass ppm of tetradecane as an internal standard while shaking for 3 hours, then all was allowed to stand overnight, and the acetone layer was collected. The amounts of octamethylcyclotetrasiloxane, decamethylcyclopentasiloxane and dodecamethylcyclohexasiloxane were determined by gas chromatography.

### Stability of the emulsion

100 grams of the aqueous dispersion of the silicone emulsion were placed in a 100-milliliter glass bottle and allowed to stand at 40°C for one month, and then the appearance was observed. When the emulsion remained in a uniform single phase and no separation was observed, stability was evaluated as "Good". When separation into two phases was observed, stability was evaluated as "Bad".

### Coating formability

In a Petri dish made of aluminum, 1.5 g of the aqueous dispersion of a silicone emulsion was placed and allowed to stand at 105°C for 3 hours to remove water. The residual non-volatile component was evaluated on hand feeling. When a coating was formed, the coating formability of the aqueous dispersion was evaluated as "Good". When a coating was not formed, the coating formability of the aqueous dispersion was evaluated as "Bad".

### Slipping property

The aqueous dispersion of a silicone emulsion was diluted with ion-exchanged water so as to give a non-volatile content of 20% after being dried at 105°C for 3 hours to, thereby, prepare a treatment liquid. A sponge-like ethylene propylene diene rubber was coated with the resulting treatment liquid, air-dried at room temperature, and dried at 150°C for 5 minutes to obtain a test piece. The dynamic friction coefficient of the test piece was determined by fixing it to a jig and rubbing a glass plate with it in the conditions of a load of 500 g and a rate of 100 mm/s by a friction-wear tester, Tribogear TYPE: 40 (ex SHINTO Scientific Co., Ltd.). The determination of the dynamic friction coefficient was conducted only when the test piece was obtained, thus, the evaluation as "Good" in the aforesaid evaluation of the coating formability. The result for the samples which were not evaluated, a sign "-" is shown in the following Table 1.

**[Table 1]**

| | Composition | | | Evaluation of (A) emulsion composition | | Evaluation of aqueous dispersion of the silicone emulsion | | | | |
|---|---|---|---|---|---|---|---|---|---|---|
| | Parts by mass of component (B) relative to 100 parts by mass of component (A-1) | The ratio of SiH / SiVi of components (a1) and (a2) | (C) Catalyst | Viscosity of a 30%solution of an organopolysiloxane (A-1) extracted from the emulsion, mPa·s | | Volume average particle diameter of emulsion, nm | Amount of D₄ ^{Note 1),} ppm | Stability | Coating formability | Dynamic friction coefficient for a slipping property |
| Example 1 | 17.03 | 1.10 | - | Emulsion Composition 1 | 10,000 | 270 | <100 | Good | Good | 0.47 |
| Example 2 | 12.11 | 1.10 | - | Emulsion Composition 1 | 10,000 | 270 | <100 | Good | Good | 0.83 |
| Example 3 | 17.03 | 1.10 | - | Emulsion Composition 2 | 5,360 | 420 | <100 | Good | Good | 0.85 |
| Example 4 | 11.98 | 1.10 | 9.8%H₂SO₄ (aq.) | Emulsion Composition 1 | 10,000 | 270 | <100 | Good | Good | Note 2 |
| | | | 10%NaHCO₃ (aq.) | | | | | | | |
| Example 5 | 11.98 | 1.10 | Dioctyltin dineodecanoate | Emulsion Composition 1 | 10,000 | 270 | <100 | Good | Good | Note 2 |
| Example 6 | 17.03 | 1.10 | - | Emulsion Composition 3 | 2,350 | 350 | <100 | Good | Good | 0.62 |
| Comparative Example 1 | 3.59 | 1.10 | - | Emulsion Composition 1 | 10,000 | 270 | <100 | Good | Bad | - |
| Comparative Example 2 | 17.03 | 0.95 | - | Emulsion Composition 4 | 200 | 270 | <100 | Good | Bad | - |
| Comparative Example 3 | 20.43 parts by mass of component (B), relative to 100 parts by mass of the emulsion composition comprising ring-opening polymers of cyclic siloxanes | | - | Emulsion Composition 5 | 1,560 | 170 | 14,470 | Good | Good | 0.96 |
| Comparative Example 4 | | | - | Emulsion Composition 6 | 12,360 | 210 | 23,000 | Good | Good | 1.64 |

| | | | | | | | | | | |
|---|---|---|---|---|---|---|---|---|---|---|
| Note 1: D₄:Octamethylcyclotetrasiloxane Note 2: The aqueous dispersions of Examples 4 and 5 had the good stability and coating formability, but a slipping property was not evaluated because the sponge-like rubber repelled the treatment liquid. | | | | | | | | | | |

In Examples 1 to 6 and Comparative Examples 1 and 2, the decamethylcyclopentasiloxane (D₅) content is less than 100 ppm, and the dodecamethylcyclohexasiloxane (D₆) content is also less than 100 ppm.

In contrast, in Comparative Example 3, the decamethylcyclopentasiloxane (D₅) content is 10900 ppm, and the dodecamethylcyclohexasiloxane (D₆) content is 4100 ppm. In Comparative Example 4, the decamethylcyclopentasiloxane (D₅) content is 13800 ppm, and the dodecamethylcyclohexasiloxane (D₆) content is 4700 ppm.

As seen in Comparative Example 1 in Table 1, where the amount of the silane compound (B) is small, no coating is formed. As seen in Comparative Example 2, when the ratio of the number of the hydrosilyl group to the number of the alkenylsilyl group in the emulsion composition is small, no coating was formed. This is because the ratio of the amount of component (a2) is small, so that the formation of a silanol group from the hydrosilyl group through the dehydrogenation reaction did not proceed and the amount of the silanol group present in the resulting emulsion composition was smaller. Therefore, the condensation reaction of the linear organopolysiloxane (A-1) with component (B) did not proceed well.

Further, as seen in Comparative Examples 3 and 4, the emulsion of the linear organopolysiloxane prepared by the condensation polymerization and the emulsion of the organopolysiloxane having a branched structure had a short chain length and contained a large amount of the cyclic siloxanes as an impurity, so that the coatings obtained from these emulsions were inferior in the slipping property.

In contrast, as seen in Table 1, the aqueous dispersions prepared in Examples 1 to 6 were stable and showed an excellent coating formability after removing water by drying. This means that the condensation reaction of the linear organopolysiloxane (A-1) with the silane compound (B) proceeded well. In addition, in the present aqueous dispersions of the condensation curable silicone, the emulsions had a small particle diameter and good stability over time. Further, the coatings obtained from the aqueous dispersion of Examples 1 to 3 and 6 had a good slipping property because the linear organopolysiloxane (A-1) of the present invention had a sufficiently long chain length and the amount of the cyclic siloxanes contained as an impurity was small. The linear organopolysiloxanes of Examples 4 and 5 had chain lengths comparable to those of Examples 1 to 3 and 6 and the cyclic siloxane contents as an impurity as small as those of these Examples. Therefore, although the slipping property was not evaluated in Examples 4 and 5 as described above, a coating would be formed with a slipping property as excellent as in Examples 1 to 3 and 6.

### INDUSTRIAL APPLICABILITY

The aqueous dispersion of the silicone emulsion according to the present invention has a good stability over time and forms a coating by drying. The aqueous dispersion provides a coating having an excellent slipping property and is useful for a slipping agent, a fiber treatment, and a coating agent to be applied to a surface of various substrates.

## Claims

1. An aqueous dispersion comprising
an emulsion comprising a silicone which is a condensation reaction product of the following components (A-1) and (B):
(A-1) a linear organopolysiloxane being the addition reaction product of (a1) a linear organopolysiloxane having two alkenylsilyl groups, each only being at each of the molecular terminals, and (a2) a linear organopolysiloxane having two hydrosilyl groups, each only being at each of the molecular terminals, provided that the ratio of the number of the hydrosilyl group in component (a2) to the number of the alkenylsilyl group in component (a1) is 0.98 to 2;
5 to 40 parts by mass of (B) a hydrolysable silane having, in one moleculte, at least three groups selected from the group consisting of a silanol group and an alkoxy group, relative to 100 parts by mass of component (A-1);
0.1 to 20 parts by mass of (A-2) a surfactant, relative to 100 parts by mass of component (A-1); and
10 to 200 parts by mass of (A-3) water, relative to 100 parts by mass of component (A-1).

2. The aqueous dispersion of the silicone emulsion according to claim 1, wherein component (B) is a trialkoxysilane.

3. The aqueous dispersion of the silicone emulsion according to claim 1 or claim 2, further comprising a catalytic amount of (C) a condensation catalyst.

4. A coating composed of the silicone emulsion contained in the aqueous dispersion according to any one of claims 1 to 3.

5. A method for preparing the aqueous dispersion according to any one of claims 1 to 3, wherein the method comprises steps of:
emulsifying and addition-reacting (a1) the linear organopolysiloxane having two alkenylsilyl groups, each only being at each of the molecular terminals and (a2) the linear organopolysiloxane having two hydrosilyl groups, each only being at each of the molecular terminals in the presence of (A-2) the surfactant and (A-3) water to prepare an emulsion composition comprising (A-1) the linear organopolysiloxane,
mixing the emulsion composition and (B) the hydrolysable silane having at least three groups selected from the group consisting of a silanol group and an alkoxy group in one molecule and, optionally, the catalyst (C), and
subjecting the component (B) and the linear organopolysiloxane to a condensation reaction to, thereby, obtain the aqueous dispersion of the silicone emulsion.

6. A method for preparing a coating composed of the silicone emulsion according to claim 5, wherein the method comprises a step of drying the aqueous dispersion of the silicone emulsion to remove water to obtain the coating composed of the silicone emulsion.

## Patentansprüche

1. Wässrige Dispersion, umfassend:
eine Emulsion, umfassend ein Silikon, das ein Kondensationsreaktionsprodukt der folgenden Komponenten (A-1) und (B) ist:
(A-1), ein lineares Organopolysiloxan, welches das Additionsreaktionsprodukt von (a1), einem linearen Organopolysiloxan mit zwei Alkenylsilylgruppen ist, wobei jede nur an jeder der Molekülenden ist, und (a2), einem linearen Organopolysiloxan mit zwei Hydrosilylgruppen, wobei jede nur an jeder der Molekülenden ist, vorausgesetzt, dass das Verhältnis der Zahl der Hydrosilylgruppe in Komponente (a2) zur Zahl der Alkenylsilylgruppe in Komponente (a1) 0,98 bis 2 ist;
5 bis 40 Massenteile von (B), einem hydrolysierbaren Silan, mit, in einem Molekül, mindestens drei Gruppen ausgewählt aus der Gruppe bestehend aus einer Silanolgruppe und einer Alkoxygruppe, relativ zu 100 Massenteilen der Komponente (A-1);
0,1 bis 20 Massenteile von (A-2), einem Tensid, relativ zu 100 Massenteilen der Komponente (A-1); und
10 bis 200 Massenteile von (A-3), Wasser, relativ zu 100 Massenteilen der Komponente (A-1).

2. Wässrige Dispersion der Silikonemulsion nach Anspruch 1, wobei die Komponente (B) ein Trialkoxysilan ist.

3. Wässrige Dispersion der Silikonemulsion nach Anspruch 1 oder Anspruch 2, ferner umfassend eine katalytische Menge von (C), einem Kondensationskatalysator.

4. Beschichtung, zusammengesetzt aus der Silikonemulsion enthalten in der wässrigen Dispersion nach einem der Ansprüche 1 bis 3.

5. Verfahren zum Herstellen der wässrigen Dispersion nach einem der Ansprüche 1 bis 3, wobei das Verfahren die Schritte umfasst von:
Emulgieren und Additionsreagieren von (a1), des linearen Organopolysiloxans mit zwei Alkenylsilylgruppen, wobei jede nur an jeder der Molekülenden ist, und (a2) des linearen Organopolysiloxans mit zwei Hydrosilylgruppen, wobei jede nur an jeder der Molekülenden ist, in Anwesenheit von (A-2), dem Tensid, und (A-3), Wasser, zur Herstellung einer Emulsionszusammensetzung, umfassend (A-1) das lineare Organopolysiloxan,
Mischen der Emulsionszusammensetzung und (B) des hydrolysierbaren Silans mit mindestens drei Gruppen ausgewählt aus der Gruppe bestehend aus einer Silanolgruppe und einer Alkoxygruppe in einem Molekül, und optional des Katalysators (C), und
Unterziehen der Komponente (B) und des linearen Organopolysiloxans einer Kondensationsreaktion, um dadurch die wässrige Dispersion der Silikonemulsion zu erhalten.

6. Verfahren zum Herstellen einer Beschichtung zusammengesetzt aus der Silikonemulsion nach Anspruch 5, wobei das Verfahren einen Schritt des Trocknens der wässrigen Dispersion der Silikonemulsion umfasst, um Wasser zu entfernen, um die Beschichtung zusammengesetzt aus der Silikonemulsion zu erhalten.

## Revendications

1. Dispersion aqueuse comprenant
une émulsion comprenant une silicone qui est un produit de réaction de condensation des composants (A-1) et (B) suivants :
(A-1) un organopolysiloxane linéaire qui est le produit de réaction par addition de (a1) un organopolysiloxane linéaire ayant deux groupes alcénylsilyle, chacun étant à chacune des extrémités moléculaires, et (a2) un organopolysiloxane linéaire ayant deux groupes hydrosilyle, chacun étant à chacune des extrémités moléculaires, sous réserve que le rapport du nombre des groupes hydrosilyle dans le composant (a2) au nombre des groupes alcénylsilyle dans le composant (a1) soit de 0,98 à 2;
5 à 40 parties en masse, pour 100 parties en masse du composant (A-1), de (B) un silane hydrolysable ayant, par molécule, au moins trois groupes choisis dans l'ensemble constitué par un groupe silanol et un groupe alcoxy ;
0,1 à 20 parties en masse, pour 100 parties en masse du composant (A-1), de (A-2) un tensioactif ; et
10 à 200 parties en masse, pour 100 parties en masse du composant (A-1), de (A-3) eau.

2. Dispersion aqueuse de l'émulsion de silicone selon la revendication 1, dans laquelle le composant (B) est un trialcoxysilane.

3. Dispersion aqueuse de l'émulsion de silicone selon la revendication 1 ou la revendication 2, comprenant en outre une quantité catalytique de (C) un catalyseur de condensation.

4. Revêtement composé de l'émulsion de silicone contenue dans la dispersion aqueuse selon l'une quelconque des revendications 1 à 3.

5. Procédé pour préparer une dispersion aqueuse selon l'une quelconque des revendications 1 à 3, lequel procédé comprend les étapes de :
émulsification et réaction par addition de (a1) l'organopolysiloxane linéaire ayant deux groupes alcénylsilyle, chacun étant à chacune des extrémités moléculaires, et de (a2) l'organopolysiloxane linéaire ayant deux groupes hydrosilyle, chacun étant à chacune des extrémités moléculaires, en présence de (A-2) le tensioactif et (A-3) l'eau, pour préparer une composition en émulsion comprenant (A-1) l'organopolysiloxane linéaire,
mélange de la composition en émulsion et de (B) le silane hydrolysable ayant, par molécule, au moins trois groupes choisis dans l'ensemble constitué par un groupe silanol et un groupe alcoxy, et éventuellement (C) le catalyseur, et
soumission du composant (B) et de l'organopolysiloxane linéaire à une réaction de condensation de façon que soit ainsi obtenue la dispersion aqueuse de l'émulsion de silicone.

6. Procédé pour préparer un revêtement composé de l'émulsion de silicone selon la revendication 5, lequel procédé comprend une étape de séchage de la dispersion aqueuse de l'émulsion de silicone pour éliminer l'eau afin que soit obtenu le revêtement composé de l'émulsion de silicone.
